(19) Europäisches Patentamt / European Patent Office / Office européen des brevets

(11) **EP 1 335 054 B1**

(12) **EUROPEAN PATENT SPECIFICATION**

(45) Date of publication and mention
of the grant of the patent:
**14.02.2007 Bulletin 2007/07**

(51) Int Cl.:
***D04B 15/48*** *(2006.01)*

(21) Application number: **02027344.7**

(22) Date of filing: **07.12.2002**

(54) **Method and device for measuring weft thread, particularly in electronic circular knitting machines**

Verfahren und Vorrichtung zur Messung des Schussfadens, insbesondere in elektronischen Rundstrickmaschinen

Procédé et dispositif pour mesurer le fil de trame, en particulier dans les métiers à tricoter circulaires électroniques

(84) Designated Contracting States:
**BE CH DE LI SE**

(30) Priority: **28.01.2002 IT TO20020075**

(43) Date of publication of application:
**13.08.2003 Bulletin 2003/33**

(73) Proprietor: **L.G.L. Electronics S.p.A.**
**24024 Gandino (Bergamo) (IT)**

(72) Inventors:
• **Zenoni, Pietro**
**24026 Leffe 8Prov. of Bergamo) (IT)**

• **Gotti, Luca**
**24021 Albino (Prov. of Bergamo) (IT)**
• **Pedrini, Giovanni**
**24026 Leffe (Prov. of Bergamo) (IT)**

(74) Representative: **Spandonari, Carlo**
**Spandonari & Modiano S.r.l.**
**Corso Duca degli Abruzzi 16**
**10129 Torino (IT)**

(56) References cited:
| | |
|---|---|
| EP-A- 0 327 973 | EP-A- 0 401 699 |
| EP-A- 0 950 742 | EP-A- 1 048 768 |
| EP-A- 1 050 610 | WO-A-88/08893 |
| FR-A- 2 794 142 | US-A- 4 768 565 |

EP 1 335 054 B1

## Description

The present invention relates to a method and a device for measuring the use of weft thread inserted by means of weft feeders in textile machines, particularly in electronic circular knitting machines.

As is well-known to persons skilled in the art, in weaving processes in general the weft thread is typically fed to the textile machine by virtue of weft feeders, which are devices provided with a fixed drum and with an arm that rotates in a fishing-reel fashion and winds onto said drum a plurality of turns of thread that constitute a weft reserve; said turns unwind in a controlled fashion from said drum when requested by the textile machine, loom, or knitting machine or the like, at each weft insertion.

According to the standard configuration of weaving lines, the weft feeder is inserted between the spool of weft thread and the textile machine, and is provided with an output thread guiding ring, with which a corresponding output sensor is associated; said sensor is capable of providing a pulsed signal, typically in terms of electrical voltage, whenever the weft being unwound makes a full turn with respect to the thread guiding ring, which corresponds to the unwinding of a turn of the reserve from the drum of the weft feeder. Said pulsed signal is usually used to control the rotation rate of the fishing reel-like arm that restores the weft reserve as the turns of thread unwind from the drum of the feeder.

Preferably, said signal is produced by a piezoelectric sensor, which is functionally connected to an amplification and peak detection circuit, capable of detecting the rapid passage of the weft thread and of activating a functional logic block which, by processing said signal together with others that arrive from corresponding sensors for detecting the rotation of the fishing reel-like arm, provides a supply voltage for the motor of the arm that is suitable to drive said motor and said arm at a speed suitable to correctly restore the weft reserve. A system for controlling the rotation rate of the fishing reel-like arm with a piezoelectric output sensor as specified is described in European patent EP 04011699 in the name of the same Applicant. Although the use of such a piezoelectric sensor is advantageous in various respects and essentially for constructive simplification, the use of output sensors of another type, and particularly of photocell sensors described for example in European patent EP 0327973 and suitable to perform the same function of thread transit sensors, is also known and widespread. Accordingly, in the continuation of the present description, the expression "output sensor" will be used to designate equally any kind of sensor suitable for the specified purpose.

In textile machines in general, it is sometimes necessary to measure with suitable precision also the quantity of weft unwound at each insertion. In particular, in electronic circular knitting machines it is necessary to measure the quantity of weft unwound, expressed in centimeters, on each one of the so-called drops that form the knitting. This measurement is in fact indispensable in order to eliminate some defects in the items being knitted and in particular to eliminate so-called "streaks" in the knitting of the finished item, a defect which occurs when more thread than expected is used even at a single drop.

For this purpose, current weaving lines that comprise for example circular knitting machines include respective measuring instruments, known as TLT (weft length testers), which are inserted between the weft feeders and the machines - such as, typically, the known instrument referenced by the acronym YLT (Yarn Length Tester) manufactured by the German company Barth Tex - to which the textile machine sends a synchronization signal that constitutes a measurement reset reference. In practice, at each synchronization signal the instrument indicates the quantity (in cm) of weft used in the time period between said signal and the previously received signal. Usually, the circular textile machine provides the synchronization pulse at each turn of the main shaft of said machine, or, at the user's choice, every "n" full turns of said shaft, for example every 10 turns.

This known system for measuring the length of weft used at each insertion, despite being sufficiently reliable, increases considerably the complexity of the structure of weaving lines by inserting therein, in addition to the weft feeder, said measurement instrument, which on the one hand entails a considerable increase in the cost of the line and on the other hand is an additional hindrance to the free sliding of the weft thread, with consequent increase in the possibility of jamming (for example due to tangling) and breakage of said thread.

The aim of the present invention is essentially to eliminate the drawbacks of said known measurement system, and within the scope of this general aim the invention has the important object of providing a method and a device for measuring the weft thread inserted in textile machines, especially circular knitting machines, which are extremely simplified, economical and such as to require no structural variation of the weaving lines, excluding in particular the use of additional measurement instruments of the specified type or the like.

Another important object of the present invention is to provide a measurement method and device that are extremely reliable, highly precise and substantially free from jamming and stoppages of the weaving process caused by any malfunction of additional measurement elements present on the weaving line.

This is achieved, according to the present invention, with a method and a device having the features set out in the following claims.

Essentially, the measurement method according to the present invention is based on the concept of using the output sensor associated with the weft feeder by sending its pulses to a second functional logic block, which also receives the synchronization signals of the textile machine. Said second logic block is programmed to calculate the quantity of weft used between two successive synchronization signals by taking into account the circumference of the fixed drum of the feeder, the number of pulses emitted by the output sensor between one synchronization signal and the next, and a time correction factor that allows to also evaluate, in the measurement of weft use, the turns partially unwound from the drum of the feeder respectively after the first synchronization signal and before the second and subsequent signal.

According to the invention, and as will become apparent from the description that follows, said time correction factor comprises the sum of the time intervals between the first synchronization signal and the output pulse that directly precedes it, in ratio with the times that separate respectively the pairs of output pulses that straddle the corresponding synchronization signals.

Accordingly, the measurement device according to the present invention comprises at least one second logic block, which is associated with the weft feeder and is functionally connected to the output sensor of said weft feeder, from which it receives the output pulses generated by the passage of the weft thread in the terminal thread guiding ring of said feeder, and is also functionally connected to the textile machine, from which it receives periodic synchronization signals that constitute the references for resetting the measurement made.

The characteristics, purposes and advantages of the method and of the device according to the present invention will become apparent from the detailed description that follows and with reference to the accompanying drawings, given by way of non-limitative example, wherein:

Figure 1 is a schematic functional and circuit diagram of a weaving line with a known type of system for feeding and measuring the use of weft thread;
Figure 2 is a circuit diagram, similar to the diagram of Figure 1, but illustrating the improved system for feeding and measuring the use of weft thread according to the present invention;
Figure 3 is a timing chart of the signals used in the measurement method according to the present invention.

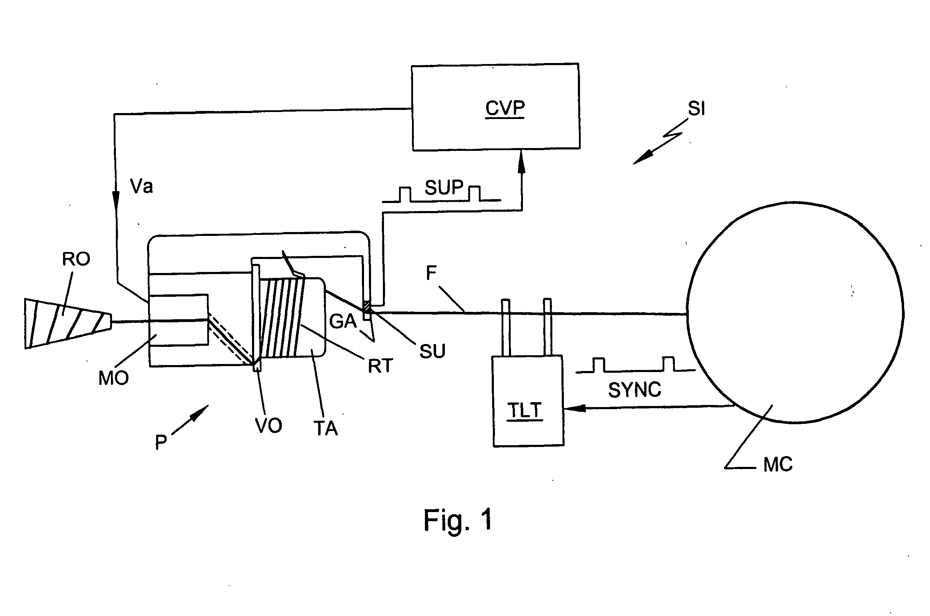

Initially with reference to Figure 1, the reference sign MC generally designates an electronic circular knitting machine, and the reference sign SI designates a known system for feeding the weft thread F to the machine MC and for measuring the quantity of weft thread (expressed in cm) unwound on the various drops that compose the knitted fabric being formed.

The system SI substantially comprises a weft feeder P, with a fixed drum TA on which a fishing reel-like arm, driven by a motor MO associated with a rotating disk VO arranged at the base of the drum, winds a plurality of turns of thread F, which unwind from a spool RO and constitute a thread reserve RT.

At the end section of the drum TA, the feeder P comprises a terminal thread guiding ring GA, with which an output sensor SU is associated, said sensor being able to provide a pulsed signal SUP, typically in terms of electrical voltage, whenever the weft thread F being unwound makes a complete turn with respect to the thread guiding ring GA that corresponds of the unwinding of a turn of the reserve from the drum TA of the weft feeder P. The pulsed signal SUP is used to control the rotation rate of the fishing reel-like arm that replenishes the weft reserve as the turns of thread are unwound from the drum TA of the feeder.

Preferably, said signal SUP is produced by a piezoelectric sensor SU, which is functionally connected, with the interposition of a peak sensing and amplification circuit (not shown), to a functional logic block CVP, which by processing said signal, together with others that arrive from corresponding sensors (not shown) for sensing the rotation of the fishing reel-like arm, provides a voltage Va for supplying the motor MO of the arm that is suitable to actuate said motor and said arm at a rate that is suitable to correctly restore the weft reserve. To measure the quantity of weft thread unwound on the various drops that compose the knitted fabric being formed, the known SI system described above uses a measurement instrument which is also known, designated by the reference sign TLT in Figure 1, which is suitable to provide the measurement (in cm) of the thread dispensed in the period of time between two synchronization signals SYNC sent by the circular machine MC to said instrument.

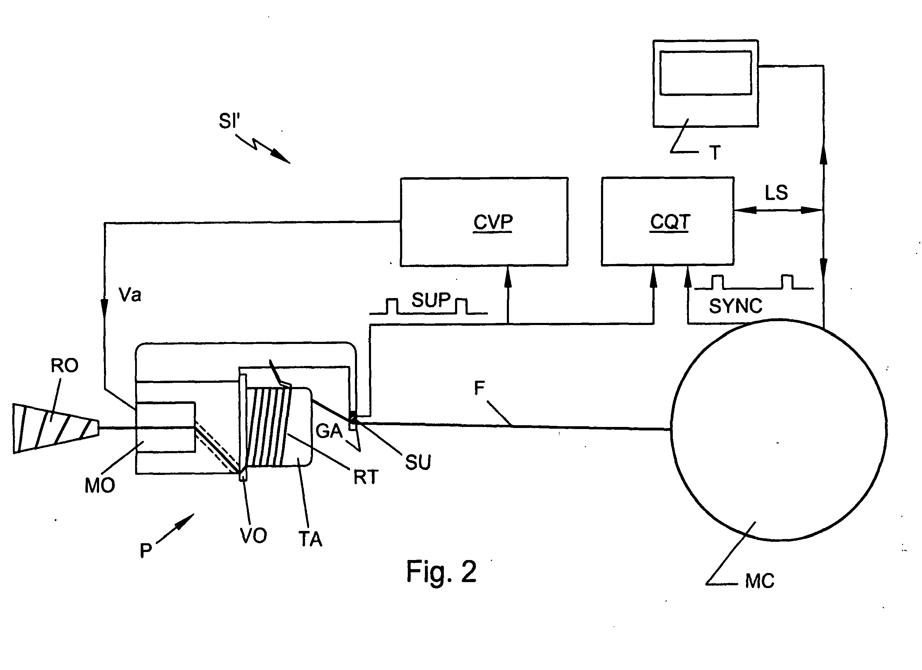

According to the present invention, and in order to achieve the expressly stated aim and objects, the feeding and measurement system SI' is improved as shown in Figure 2, in which the similar or corresponding parts are designated by the same reference signs. Said figure shows that the weaving line does not have the TLT measurement instrument and has instead a second logic functional block CQT, preferably integrated into the feeder P, which receives both the pulses SUP generated by the output sensor SU and the synchronization signals SYNC generated by the machine MC. A bidirectional serial communication line LS routes the output of the block CQT equally toward a terminal T (for example a visual display) or toward a user interface of the machine MC.

The logic block CQT is programmed to calculate the quantity of weft thread used between two successive synchronization signals SYNC, taking into account the number of pulses SUP emitted by the output sensor between one synchronization signal and the next and a time correction factor that allows to also evaluate, in the measurement of weft use, the turns partially unwound from the drum of the feeder respectively after the first synchronization signal and before the second and subsequent signal.

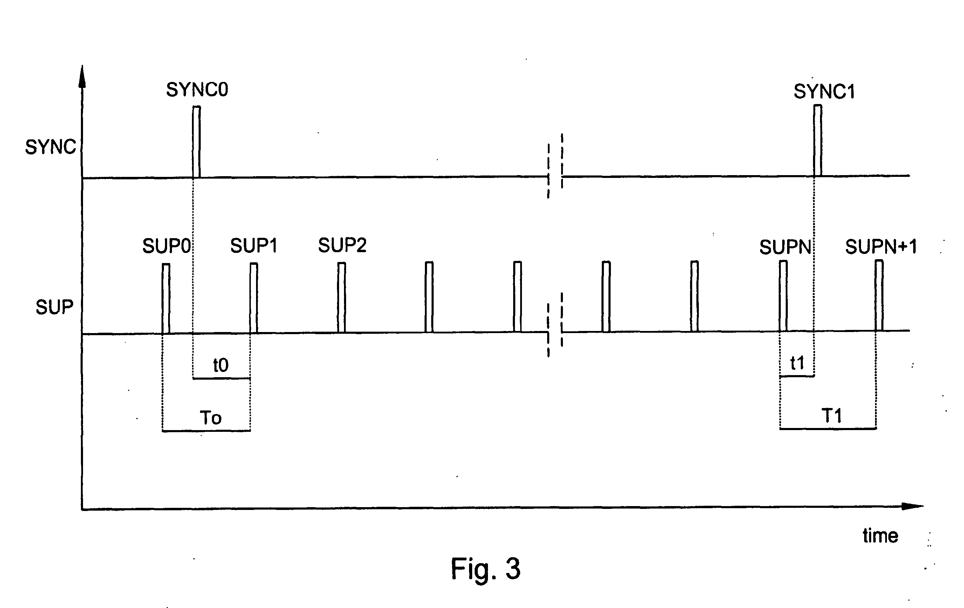

More specifically, and with reference to Figure 3, using SYNC0 and SYNC1 to reference two separate and successive synchronization signals, SUP0 and SUP1 to designate the pulse that precedes the first synchronization signal SYNC0 and, respectively, the pulse that directly follows said first signal, SUPN to designate the pulse that directly precedes the second synchronization signal SYNC1, and SUPN+1 to designate the pulse that directly follows said second signal, the logic block CQT calculates the quantity Qt (in cm) of weft used between the two synchronization signals, wherein:

$$Qt = (\frac{t0}{T0} + \frac{t1}{T1} + N - 1) * C \qquad a)$$

where N, which is the number of pulses within the time interval delimited by the two synchronization signals, is an integer greater than or equal to 1, C is the circumference of the fixed drum TA of the weft feeder P, t0 is the time that elapses between the first synchronization signal SYNC0 and the pulse SUP that directly follows it, T0 is the time that elapses between the pair of pulses SUP0-SUP1 that straddle the first synchronization signal, t1 is the time that elapses between the second synchronization signal SYNC1 and the directly preceding pulse SUPN, and T1 is the time that elapses between the pair of pulses SUPN- SUPN+1 straddling the second synchronization signal SYNC1.

The algebraic expression in brackets in the relation a) specified above is a time correction factor that allows to also evaluate, in measuring weft use, the turns partially unwound from the drum of the feeder respectively after the first synchronization signal SYNC0 and before the second and subsequent signal SYNC1. Said correction factor is fundamental for correct evaluation of the quantity of weft thread that is inserted, since calculating the quantity Qt of inserted weft simply as C*N entails an error whose maximum absolute value is +/-C; an error that can be absolutely unacceptable. In practical terms, considering that the typical diameter of the drum TA of a feeder P is equal to 110 mm, in the absence of the correction factor introduced by the measurement method according to the invention, the error that might affect the measurement Qt of the inserted quantity of weft would in fact be comprised between +/- 34.5 cm.

Without altering the principle of the invention, the details of execution of the measurement method and the embodiments of the device for performing the method may of course be changed extensively with respect to what has been described and illustrated by way of non-limitative example without thereby abandoning the scope of the invention.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. A method for measuring the use of weft thread (F) inserted in textile machines by means of weft feeders (P), especially for electronic circular knitting machines (MC), **characterized in that** it consists in using the output sensor (SU) associated with the weft feeder (P), by sending its pulses (SUP) to a functional logic block (CQT), which also receives synchronization signals (SYNC) generated by the textile machine (MC): said logic block (CQT) being programmed to calculate the quantity (Qt) of weft used between two successive synchronization signals (SYNC0-SYNC1) by taking into account the circumference (C) of the drum (TA) of the feeder (P), the number (N) of pulses (SUP) emitted by the output sensor (SU) of the feeder (P) between one synchronization signal and the next, and a time correction factor that allows to also evaluate, in the measurement of weft use, the turns partially unwound from the drum of the feeder respectively after the first synchronization signal (SYNC0) and before the second and subsequent signal (SYNC 1).

2. The measurement method according to claim 1, **characterized in that** said time correction factor includes the sum of the time intervals (t0-t1) comprised between the first synchronization signal (SYNC0) and the output pulse (SUP1) that directly follows it and, respectively, between the second synchronization signal (SYNC1) and the output pulse (SUPN) that directly precedes it, in ratio with the times (T0-T1) that separate respectively the pairs of output pulses (SUP0-SUP1; SUPN-SUPN+1) straddling the corresponding synchronization signals.

3. The measurement method according to one of claims 1 or 2, **characterized in that** said synchronization signals (SYNC-0,1) are generated by the textile machine (MC) at every full turn of the main shaft of the machine.

4. The measurement method according to one of claims 1 to 3, **characterized in that** said synchronization signals (SYNC-0,1) are generated by the textile machine (MC) periodically at every whole number of full turns of the main shaft of the machine.

5. A device for performing the measurement method according to one of the preceding claims, **characterized in that** it comprises at least one logic block (CQT), which is programmed to perform the measurement, is associated with the weft feeder (P), and is functionally connected to the output sensor (SU) of said feeder, from which it receives the output pulses (SUP) generated by the passage of the weft thread (F); said logic block being furthermore functionally connected to the textile machine (MC), from which it receives periodic synchronization signals (SYNC) that constitute references for resetting the measurement made.

6. The device according to claim 5, **characterized in that** said logic block (CQT) is integrated in said weft feeder (P).

7. The device according to claim 5 or 6, **characterized in that** said logic block (CQT) comprises a bidirectional serial communication line (LS), which routes the output of the block equally toward a terminal (T) (for example a visual display) or toward a user interface of the machine (MC).

8. The method for measuring the use of weft thread (F) inserted by virtue of weft feeders (P) in textile machines, especially electronic circular knitting machines (MC), substantially as described and illustrated.

9. The device for measuring the use of weft thread (F) inserted by virtue of weft feeders (P) in textile machines, especially electronic circular knitting machines (MC), substantially as described and illustrated.

**Patentansprüche**

1. Verfahren zum Messen des Verbrauchs eines Schussfadens (F), der in Textilmaschinen mit Hilfe von Schussfadenzuführern (P) eingeführt wird, insbesondere für elektronische Rundstrickmaschinen (MC),
   **dadurch gekennzeichnet, dass** es im Verwenden des dem Schussfadenzuführer (P) zugeordneten Ausgabesensors (SU) besteht, indem er seine Impulse (SUP) an einen funktionalen Logikblock (CQT) sendet, der auch von der Textilmaschine (MC) erzeugte Synchronisationssignale (SYNC) erhält, wobei der Logikblock (CQT) dazu programmiert ist, die Schussfadenmenge (Qt) zu berechnen, die zwischen zwei aufeinander folgendenden Synchronisationssignalen (SYNCO-SYNC1) verbraucht wird, indem der Umfang (C) der Trommel (TA) des Zuführers (P), die Anzahl (N) der Impulse (SUP), die von dem Ausgabesensor (SU) des Zuführers (P) zwischen einem Synchronisationssignal und dem Nächsten ausgegeben werden, und ein Zeitkorrekturfaktor berücksichtigt werden, der es auch ermöglicht, dass bei der Messung des Schussfadenverbrauchs die von der Trommel des Zuführers jeweils nach dem ersten Synchronisationssignal (SYNC0) und vor dem zweiten und nachfolgenden Signal (SYNC1) teilweise abgewickelten Wicklungen ausgewertet werden.

2. Messverfahren nach Anspruch 1,
   **dadurch gekennzeichnet, dass** der Zeitkorrekturfaktor die Summe der Zeitintervalle (t0 - t1), die zwischen dem ersten Synchronisationssignal (SYNC0) und dem unmittelbar darauffolgenden Ausgabeimpuls (SUP1) bzw. zwischen dem zweiten Synchronisationssignal (SYNC1) und dem unmittelbar vorhergehenden Ausgabeimpuls (SUPN) liegen, im Verhältnis zu den die Ausgabeimpuls-Paare (SUP0 - SUP1; SUPN - SUPN+1), die beiderseits der entsprechenden Synchronisationssignale liegen, trennenden Zeiten (T0 T1) umfasst.

3. Messverfahren nach Anspruch 1 oder 2,
   **dadurch gekennzeichnet, dass** die Synchronisationssignale (SYNC-0,1) von der Textilmaschine (MC) bei jeder vollen Umdrehung der Hauptwelle der Maschine erzeugt werden.

4. Messverfahren nach einem der Ansprüche 1 bis 3,
   **dadurch gekennzeichnet, dass** die Synchronisationssignale (SYNC-0,1) von der Textilmaschine (MC) periodisch bei jeder ganzzahligen vollen Umdrehung der Hauptwelle der Maschine erzeugt werden.

5. Vorrichtung zum Durchführen des Messverfahrens nach einem der vorhergehenden Ansprüche,
   **dadurch gekennzeichnet, dass** sie zumindest einen Logikblock (CQT) aufweist, der dazu programmiert ist, die Messung auszuführen, der dem Schussfadenzuführer (P) zugeordnet ist und der mit dem Ausgabesensor (SU) des Zuführers (P) funktional verbunden ist, von dem er die Ausgabeimpulse (SUP) erhält, die beim Passieren des Schussfadens (F) erzeugt werden, wobei der Logikblock ferner mit der Textilmaschine (MC) funktional verbunden ist, von der er periodische Synchronisationssignale (SYNC) erhält, die Bezugsgrößen zum Zurückstellen der vorgenommenen Messung darstellen.

6. Vorrichtung nach Anspruch 5,
   **dadurch gekennzeichnet, dass** der Logikblock (CQT) in dem Schussfadenzuführer (P) integriert ist.

7. Vorrichtung nach Anspruch 5 oder 6,
   **dadurch gekennzeichnet, dass** der Logikblock (CQT) eine bi-direktionale serielle Kommunikationsleitung (LS) aufweist, die die Ausgabe des Blocks gleichermaßen an ein Terminal (T) (beispielsweise eine Sichtanzeige) oder an eine Benutzerschnittstelle der Maschine (MC) leitet.

8. Verfahren zum Messen des Verbrauchs eines Schussfadens (F), der durch Schussfadenzuführer (P) in Textilmaschinen, insbesondere elektronische Rundstrickmaschinen (MC), eingeführt wird, wie es im Wesentlichen beschrieben und dargestellt ist.

**9.** Vorrichtung zum Messen des Verbrauchs eines Schussfadens (F), der durch Schussfadenzuführer (P) in Textilmaschinen, insbesondere elektronische Rundstrickmaschinen (MC), eingeführt wird, wie sie im Wesentlichen beschrieben und dargestellt ist.

## Revendications

**1.** Procédé pour mesurer la consommation en fil de trame (F) inséré dans les machines textiles au moyen d'un dispositif d'alimentation de fil de trame (P), spécialement pour les métiers à tricoter circulaires électroniques (MC), **caractérisé par** l'utilisation d'un détecteur de sortie (SU) associé au dispositif (P) d'alimentation en fil de trame, qui envoie un signal pulsé (SUP) à un bloc logique fonctionnel (CQT) qui reçoit aussi des signaux de synchronisation (SYNC) générés par la machine textile (MC); ledit bloc logique (CQT) étant programmé pour calculer la quantité (Qt) de fil de trame consommée entre deux signaux de synchronisation successifs (SYNCO-SYNC1) en prenant en compte la circonférence (C) du tambour (TA) du dispositif d'alimentation (P), le nombre (N) d'impulsions (SUP) émises par le détecteur de sortie (SU) du dispositif (P) d'alimentation entre un signal de synchronisation et le suivant et un facteur correction du temps qui permet aussi d'évaluer, pour mesurer l'utilisation du fil de trame, les tours partiellement non déroulés du tambour du dispositif d'alimentation respectivement après le premier signal de synchronisation (SYNC0) et avant le deuxième signal (SYNC1) qui suit.

**2.** Procédé de mesure selon la revendication 1, **caractérisé en ce que** ledit facteur de correction du temps inclus la somme des intervalles de temps (t0-t1) compris entre le premier signal de synchronisation (SYNC0) et l'impulsion de sortie (SUP1) qui le suit directement et respectivement entre le deuxième signal de synchronisation (SYNC1) et l'impulsion de sortie (SUPN) qui la précède directement, rapportée aux durées (T0-T1) qui séparent respectivement les deux impulsions de sortie (SUPO-SUP1 ; SUPN-SUPN+1) qui chevauchent les signaux de synchronisation correspondants.

**3.** Procédé de mesure selon l'une quelconque des revendications 1 ou 2, **caractérisé en ce que** lesdits signaux de synchronisation (SYNC-0,1) sont générés par la machine textile (MC) lors de chaque tour complet de l'arbre principal de la machine.

**4.** Procédé de mesure selon l'une quelconque des revendications 1 à 3, **caractérisé en ce que** les signaux de synchronisation (SYNC-0,1) sont générés périodiquement par la machine textile (MC) lors de chaque nombre entier de tours complets de l'arbre principal de la machine.

**5.** Dispositif pour réaliser le procédé de mesure selon l'une quelconque des revendications précédentes, **caractérisé en ce qu'**il comprend au moins un bloc logique (CQT) qui est programmé pour réaliser les mesures, en association avec le dispositif (P) d'alimentation en fil de trame, et qui est relié fonctionnellement au détecteur (SU) de sortie dudit dispositif d'alimentation, duquel il reçoit les impulsions de sortie (SUP) générées par le passage du fil de trame (F), ledit bloc logique étant de plus relié fonctionnellement à la machine textile (MC) de laquelle il reçoit des signaux de synchronisation périodiques (SYNC) qui constituent la référence pour remettre à l'état initial le procédé de mesure.

**6.** Dispositif selon la revendication 5, **caractérisé en ce que** ledit bloc logique (CQT) est intégré dans ledit dispositif (P) d'alimentation en fil de trame.

**7.** Dispositif selon l'une quelconque des revendications 5 ou 6, **caractérisé en ce que** ledit bloc logique (CQT) comprend une ligne de communication (LS) bidirectionnelle série qui dirige également le signal de sortie du bloc vers un terminal (T) (par exemple un écran de contrôle) ou vers l'interface de l'utilisateur de la machine (MC).

**8.** Procédé de mesure de l'utilisation du fil de trame (F) inséré à l'aide d'un dispositif d'alimentation en fil de trame (P) dans des machines textiles, spécialement pour les métiers à tricoter circulaires électroniques (MC), essentiellement comme décrit et illustré.

**9.** Dispositif de mesure de l'utilisation de fil de trame (F) inséré à l'aide d'un dispositif d'alimentation en fil de trame (P) dans des machines textiles, spécialement pour les métiers à tricoter circulaires électroniques (MC), essentiellement comme décrit et illustré.

Fig. 1

EP 1 335 054 B1

Fig. 2

EP 1 335 054 B1

Fig. 3